# EUROPEAN PATENT SPECIFICATION

(11) **EP 2 202 028 B1**
(45) Date of publication and mention of the grant of the patent: **23.11.2011**
(21) Application number: 08425816.9
(22) Date of filing: 29.12.2008
(51) Int. Cl.: B23Q 7/04, B23K 37/047, B29C 65/18

(54) **Apparatus for simultaneously drilling a workpiece and moving it between workstations**
Vorrichtung zum gleichzeitigen Bohren eines Werkstücks und Verschieben desselben zwischen den Arbeitsplätzen
Appareil pour percer une pièce de travail et la déplacer simultanément entre postes de travail

(43) Date of publication of application: 30.06.2010
(73) Proprietor: ME.C.AL. S.p.A., 27030 Frascarolo (PV) (IT)
(72) Inventor: Cavezzale, Ennio, 27030 Frascarolo (PV) (IT)
(74) Representative: Bonvicini, Davide

(56) References cited:
- EP-A- 1 854 581
- DE-A1- 4 111 596
- DE-A1- 4 232 289

## Description

The present invention addresses an apparatus for simultaneously drilling a workpiece and moving it between workstations and particularly finds use in the fabrication of casings, window frames and the like, obtained by welding plastic or metal (light alloy) sections (see, for example, EP-1854 581).

Four-head welding machines are known to be used for manufacturing window frames and doors.

Once the sections have been welded at right angles, the frames so formed have to be oriented in a station where a cleaning machine removes the weld seams and finishes or "cleans" the welds in successive steps (generally one corner at a time).

An intermediate station may be interposed between two stations, i.e. welding and cleaning stations, where the frames are drilled for later mounting of hinges and joints.

Examples of these systems are disclosed in US 7,354,227, US 7,096,913 and DE 1991804.

Nonetheless, these solutions still suffer from certain drawbacks.

While in some cases the apparatus that displaces the frameworks from one station to the other also acts or cooperates to act as a frame holding device through the workstations, there is still the need of holding the frame still within the stations to carry out the various processing steps required.

The process time corresponds to the sum of the processing times in the various stations and the interstation transfer times.

The introduction of an intermediate drill station involves a considerable increase of process times.

Furthermore, the provision of a special intermediate processing station for drilling the frame, involves considerable construction complications, higher costs and increased space requirements.

The present invention obviates the above drawbacks and provides an apparatus that allows the workpieces to be simultaneously drilled and moved from one welding station to a cleaning station.

The apparatus substantially consists of a clamp supported by a carriage which is designed to move from one station to the other.

The clamp is capable of being both translated and moved in the vertical direction (to allow the workpiece to be inserted between its jaws) as well as rotated for seizing, handling and orienting the workpiece.

The clamp jaws are conveniently formed as right-angle and squared wedge jaws respectively, for precise positioning of the workpiece relative to the clamp.

A vertically movable drill unit is mounted on one of the jaws to drill the workpiece on a surface of the workpiece exposed between the two clamp jaws.

Thus, the drilling step may be carried out while the workpiece is moved from one station to the other, with the workpiece firmly held in its proper position in the clamp.

DE 4232289 discloses a frame handling apparatus in which the movable device assists frame positioning in a weld finishing station.

The device supports a finishing tool which may also be a drilling bit.

Nevertheless, the tool may be only operated when the frame is properly positioned and firmly held in the finishing station and not during its displacement, wherefore processing times cannot by no way be reduced.

The features and advantages of the invention, which is defined in claim 1 , will be more apparent from the following description of a preferred embodiment and variants thereof, with reference to the accompanying drawings, in which
- Figure 1 is a schematic planimetric view of a system for manufacturing and processing casings and window frames;
- Figures 2A to 2G are schematic planimetric views of the various frame handling and displacement steps, in the system of Figure 1, for finishing the welded corners of the frame;
- Figure 3 is a partially exploded perspective view of a preferred embodiment of the apparatus for simultaneously drilling and handling a workpiece, particularly a window frame, in the system of Figure 1;
- Figure 4 is an exploded perspective view of a first variant embodiment of an internal jaw of the apparatus of Figure 3;
- Figures 5A and 5B are schematic planimetric views showing two window frame handling and processing steps using the apparatus of Figure 3 in the variant embodiment of Figure 4;
- Figure 6 is an exploded perspective view of a second variant embodiment of an internal jaw for the apparatus of Figure 3;

All functionally equivalent parts in the figures are designated by the same reference numerals.

A brief description of the context for which the apparatus of the invention is designed is useful for a better understanding of the characteristics of the invention and the advantages derived therefrom.

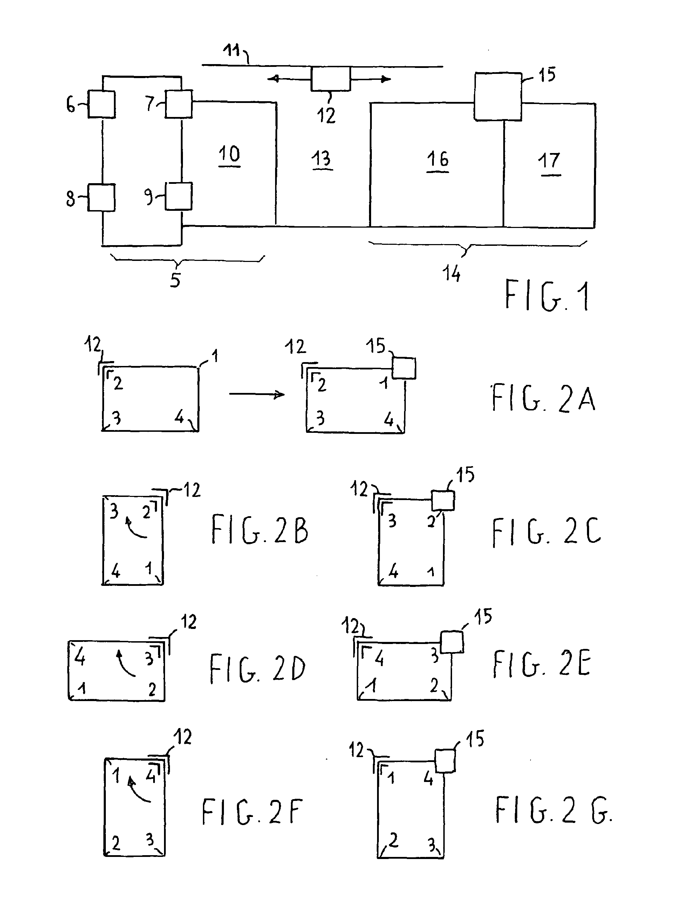

Referring to Figure 1, a system for forming and processing casings and window frames comprises, in a schematic plan view, a welding station 5, with four welding heads whose position may be adjusted according to the size of the frame to be formed.

A cooling table 10 is associated with the welding station 5, for receiving the frame pushed by pushing means, not shown, after welding.

The table 10 extends into a handling table 13, which has a weld finishing station 14 downstream therefrom.

The finishing station 14 includes a table 16 which is connected to the table 13 at one side and extends into a processed product discharging table 17 at the other side.

In a stationary position, a finishing head 15 is provided in the finishing station 14 for finishing the welded corners of the frame one at a time.

According to one embodiment, the tables 10, 13, 16, 17 include brush members, e.g. made of nylon, for a frame to be rotated and translated thereon.

Alternatively, the tables 10, 13, 16, 17 may be rolling tables, allowing substantially frictionless translation (and rotation).

A guide rail 11 is interposed between the welding station 5 and the finishing station 14 and an apparatus 12 is slideably mounted thereon for seizing and moving the frames from the welding station to the finishing station.

Motion transmission means and movers, known per se, ensure controlled motion of the gripping apparatus 12 along the rail 11.

The gripping apparatus 12 is not only designed to grip a welded frame lying on the platform 10 and translate it onto the platform 16, but also to impart a 270° rotation thereto, by successive 90° steps, so that all four welded corners of the frame may be successively presented to the finishing head 15.

EP 1854581 describes in detail a possible embodiment of a gripping device which accomplishes this function by a gripper capable of being lowered and oriented.

Figures 2A to 2G schematically show the sequence of steps to be carried out.

In these figures, the frame corners are orderly designated by numerals 1, 2, 3, 4.
Figure 2A: the gripping apparatus 12 moves over the table 10, is lowered and seizes the frame lying thereon at the corner 2, then it moves along the guide 11 and carries the corner 1 of the frame to the finishing head 15 where the weld seam is removed from all the faces of the frame at the frame corner 1. This is possible because the gripping apparatus 12 operating at the corner 2 does not interfere with the finishing head.
Figure 2B: once the corner 1 has been finished, the gripping apparatus 12, without moving along the guide 11 and while still holding the frame at the corner 2, rotates the latter by 90° clockwise.
Figure 2C: Once the frame has been released, the gripping apparatus 12 moves along the guide 11 to the corner 3, seizes the frame and moves again along the guide 11 to carry the corner 2 to the finishing head 15, where the weld seam is removed.
Figure 2D: Like in the step of Figure 2B, once the corner 2 has been finished, the apparatus 12 rotates the frame by 90° clockwise.
Figure 2E: Like in the step of Figure 2C, once the frame has been released, the gripping apparatus 12 moves along the guide 11 to the corner 4, seizes the frame and moves again along the guide 11 to carry the corner 3 to the finishing head 15, where the weld seam is removed.
Figure 2F: Like in the steps of Figure 2B and Figure 2D, once the corner 3 has been finished in the finishing station, the apparatus 12 rotates the frame by 90° clockwise without moving along the guide 11.
Figure 2G: Like in the steps of Figure 2C and Figure 2E, the gripping apparatus 12 seizes the frame at the corner 1 and translates it to carry the corner 4 to the finishing head 15, where the weld seam is removed.

Now the frame may be released from the gripping apparatus 12 and pushed onto the discharge table 17 by conventional means that are part of the finishing station.

The above sequence is only one of the many different options: for instance, the first step may consist in gripping the frame at its corner 1 and rotating it by 90° counterclockwise to present the corner 4 to the cleaning unit.

In this case, the frame will be rotated counterclockwise also in the next steps.

It will be apparent that all these steps require a very long time, of about ten minutes or even more, for most of which time (particularly in the steps in which the frame is handled and rotated, presented to the cleaning station and during weld seam removal) the frame is firmly held by the gripping and handling apparatus 11.

Thus, a drill unit may be associated with the gripping apparatus 12 for a frame drilling step to be carried out at the same time as the frame is handled and/or during the four weld finishing steps, at all the corners or only part of them, without involving any increase of processing times or substantial construction complications.

The holes for the furniture, such as hinges and joints, need only be formed on one face of the frame.

The holes also have a poor drilling depth: the metal or plastic sections that are used in the manufacture of frames, are formed by extrusion and are hollow with a wall thickness of not more than 3-5 mm.

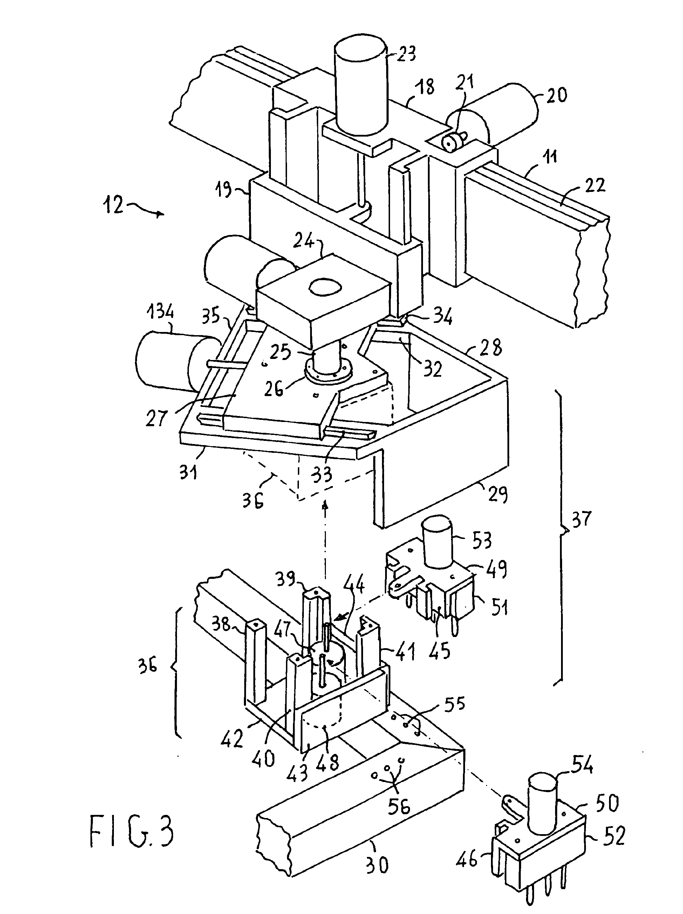

Figure 3 is a partially exploded and diagrammatic perspective view of a preferred embodiment of a handling apparatus incorporating a drill unit or more preferably two independent drill units.

The apparatus, generally designated by numeral 12, comprises a translation carriage 18 with a vertically guided slide 19 mounted thereon.

In the example of the figures, the carriage 18 slides on the rail 11 and its motion is controlled by conventional members, such as a motor 20 mounted to the carriage.

A pinion 21 is keyed to the shaft of the motor 20, for engagement with a rack 22 mounted to the rail 11.

Alternatively, motion may be transferred to the carriage 18 by means of a toothed belt.

The vertical motion of the slide 19 is controlled by a pneumatic actuator 23 or an equivalent device, mounted to the carriage 18.

A gear-motor unit 24 is mounted to the slide 19, and has a vertically oriented output shaft 25 with a flange 26 at its bottom.

A horizontally oriented plate 27 is fixed to the flange 26, and acts as a support for a clamp, generally designated by numeral 37.

The clamp comprises a first jaw composed of two vertical plates, 28 and 29 respectively, oriented at right angles, to form a right-angle jaw designed to act as an external gripper for a squared angle of the workpiece, e.g. a frame 30.

The ends of the jaw extend into two parallel horizontal arms 31, 32 in a direction corresponding to the bisecting line of the 90° angle formed by the two jaw plates.

Each of the two arms has a rail, 33 and 34 respectively.

The rails 33, 34 are parallel and engage in corresponding guides formed in the bottom of the support plate 27, so that the jaw 28, 29 is allowed to slide in a radial direction relative to the vertical axis of the shaft 25 towards the latter.

The motion of the jaw 28, 29 relative to the plate 27 and the shaft 25 is controlled by a pneumatic actuator 134 whose cylinder is mounted to a cross member 35 that connects the ends of the arms 31, 32 and whose piston rod is connected to the plate 27.

The plate 27 also acts as a support for a second jaw, generally designated by numeral 36, which is fixed to the bottom of the plate 27.

The jaw 36 essentially consists of a prismatic box-like body having a square section, which is composed of four vertical posts 38, 39, 40, 41, a bottom plate 42 for connecting the four posts and two vertical plates 43, 44 oriented at right angles and fixed to the bottom plate and to the posts 40, 41 (plate 43) and 39, 41 (plate 44) respectively.

The posts 38, 39, 40, 41 are fixed at their tops to the plate 27.

The pairs of posts 39, 41 and 40, 41, which conveniently have grooves, act as guides for a pair of slides, 45, 46 respectively, which vertically slide along such guides.

The vertical motion of the slides 45, 46 is individually controlled by a pair of pneumatic actuators 47, 48, whose cylinders are fixed to the plate 42 and whose piston rods are fixed to the slides 45, 46 respectively.

Each of the slides 45, 46 has a cantilever member, 49, 45 respectively, which extends outside the prismatic volume of the box-like body of the jaw 36 and overlies the top planar face of a workpiece, such as a frame 30, when the latter is clamped between the jaws.

Two drill units 51, 52 are mounted under the cantilever members 49, 50 and two motors 53, 54 respectively are mounted upon the cantilever members for driving the drill units 51, 52.

The drill units are shown in Figure 3 as having three twist drill bits driven by a single motor, although compact drill units are available which use a different number of bits, from two to six or even more, possibly in different arrangements and not necessarily aligned.

The drill units and possibly their motors are preferably removably attached to the cantilever members 49, 50, for easy replacement thereof according to manufacturing requirements.

It shall be incidentally noted that the jaw supporting plate 27 has convenient apertures 55, 56 which allow the motors 53, 54 to extend above the plate 27 without interfering therewith.

By driving the two drill units 51, 52 in coordination and simultaneously with workpiece handing (except during seizing, releasing and displacing the apparatus from one frame corner to the other) allows sets of holes 55, 56 to be formed at each corner of the frame 30, on the exposed planar face of the frame between the jaws.

Nonetheless, drilling shall not necessarily occur at all the corners of a frame, but even at two adjacent corners only.

This is achieved by driving the drill units only when needed.

Furthermore, drilling shall not necessarily occur on both sides of a frame corner, but even on one side only.

This is why two separate individually and selectively operable drill units are provided.

Nevertheless, there may be provided an apparatus for seizing, handling and simultaneously drilling a workpiece that employs one drill unit only, while fulfilling various requirements.

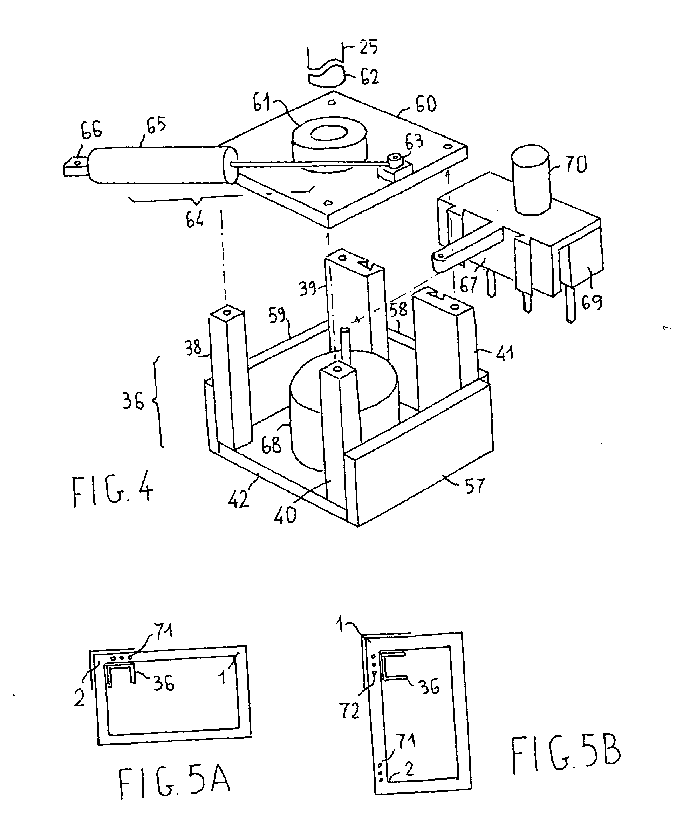

Figure 4 shows a variant embodiment of the box-like body of the jaw 36 which uses a single drill unit: no structural changes are required to the rest of the apparatus.

Like in the case of Figure 3, the jaw 36 consists of a prismatic box-like body of square section, which is composed of four vertical posts 38, 39, 40, 41 (functionally equivalent parts being designated by the same numerals), a bottom plate 42 which connects the four posts at their bottom and, unlike the structure of figure 3, three vertical plates 57, 58, 59, each oriented at right angles with the one/s adjacent thereto, to form a double squared edge.

The three plates 57, 58, 59 are fixed to the bottom plate and the posts.

Unlike the case of Figure 3, the top end of the posts is fixed to a horizontally oriented top plate 60.

The top plate 60, having a spacer block 61 thereon, freely pivots about a bottom extension 62 of the shaft 25 and is held thereagainst in a vertically fixed position by known means (such as a Seeger ring or an end nut tightened onto the end 62 or other equivalent means).

The top face of the plate 60 has one end 63 of the rod of a pneumatic actuator 64 hinged in a position eccentric to the axis of rotation of the plate and between the two posts 40, 41, the cylinder 65 of the actuator being in turn hinged, at the end 66 opposite the rod, to the plate 27 (see Fig. 3) which supports the clamping gripper.

The actuator 64 has such a size as to impart a 90° rotation to the jaw 36 relative to the support plate 27, thereby presenting either the squared wedge formed by the plates 57, 58 or the squared wedge formed by the plates 58, 59 opposing the right-angle jaw formed by the plates 28, 29 (see Fig. 3).

The two posts 39, 41 act as vertical slide guides for a slide 67 that is functionally identical to the slides 45, 46 of Figure 3.

The motion of the slide 67 is controlled by a pneumatic actuator 68 held within the box-like body of the double wedge jaw.

Like in the case of Figure 3, a drill unit 69 with a drive motor 70 is mounted to the slide 66.

It will be thus appreciated that, by selectively orienting the double-wedge jaw through the various frame gripping and handling steps and by driving the single drill unit, drilling may be carried out on the side of the frame where it is needed.

Figures 5A and 5B are diagrammatic plan views illustrating the process.

Figure 5A shows a frame 30 in which drilling is required to be carried out on one side only of the frame between the corners 1 and 2.

During the step in which the corner 2 is seized by the apparatus (which corresponds to the step as shown in Figure 2A), the jaw 36 is oriented into the position in which the holes 71 can be formed on the desired frame side.

Such orientation may be maintained in all handling steps that require no drilling.

Figure 5B shows the step in which the corner 1 is seized. This step corresponds, for example, to the step of Figure 2G of the handling sequence for finishing the welded corners.

In this step, the jaw 36 is rotated by 90° clockwise relative to the position it had in the step of Figure 5A.

Thus, the desired holes 72 may be formed on the same side of the frame in which the holes 71 have been previously formed.

While the embodiment of Figure 4 fulfills the requirements of most applications, it still has one limitation: if holes have to be formed on both sides of one corner of the frame, the internal double-wedge jaw 36 needs to be rotated.

This inevitably requires the processed frame to be released, the gripping apparatus to be lifted, the internal jaw 36 to be rotated, and the gripping apparatus to be lowered for the frame to be seized again in the clamp.

This is quite a time-consuming process.

This limitation may be obviated by providing a jaw 36 that maintains a uniquely determined position relative to the support plate 27, like in the case of figure 3, and has a drill unit thereon capable of assuming either of two positions.

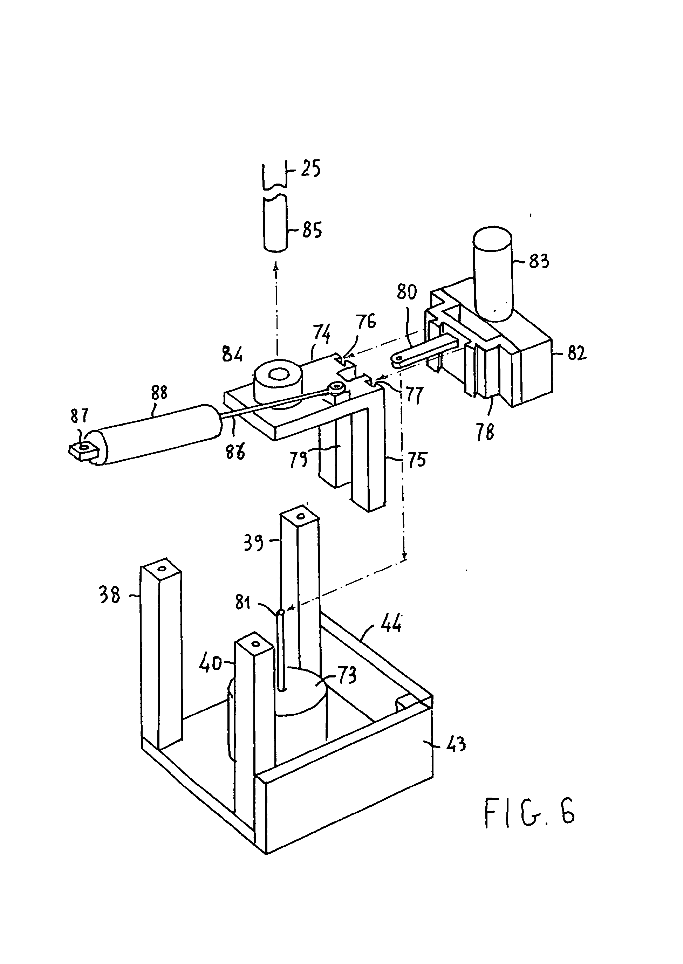

Figure 6 illustrates this embodiment.

The jaw 36 of Figure 6 is similar to that of Figure 3 but is composed of three posts only 38, 39, 40, connected to the support plate 27 (see Fig. 3).

A single pneumatic actuator 73 is installed in the box-like body of the jaw.

A squared support bracket 74 is also received in the box-like body of the jaw, and has a vertical wall 75 with vertical grooves 76, 77 that act as guides for a slide 78 and a slit 79 for the passage of a horizontal arm 80 extending from the slide 78.

The arm 80 mates with the actuating rod 81 of the pneumatic actuator 73.

A drill unit 82 with its motor 83 is mounted to the slide 78.

The bracket 74, with a spacer block 84 thereon, is pivotally attached to an extension 85 of the shaft 25.

This pivotal motion of the bracket 74 and hence of the slide 78 and the drill unit mounted thereto, is controlled by a pneumatic actuator 88 whose actuating rod 86 is connected to the support bracket 74, in a position eccentric to its axis of rotation, and whose cylinder is connected, by the end 87 opposite the rod, to the support plate 27 (see Fig. 3).

The pneumatic actuator imparts a 90° rotation to the support bracket 74 to displace the drill unit 82 from a position in which it is parallel and above the plane of the plate 44 to a position in which it is parallel and above the plane of the plate 43.

It will be appreciated that, by appropriately selecting the position of connections, the pneumatic actuator 88 that imparts rotation to the bracket 74, unlike the arrangement of Figure 6, may be also placed below the horizontal plate of the bracket 74, in which case the spacing sleeve 84 becomes useless.

Also, by providing appropriate joints in the connection of the pneumatic actuator to the support plate 27 and the bracket 74, the bracket 74 may be also pivotally connected to the extension 85 of the shaft 25 so that such bracket can slide vertically on the extension 85 and act itself as a vertically translating guide.

In this case, the pneumatic actuator 73 will operate directly on the bracket 74, and the drill unit 82 with its motor 83, may be directly fixed to the bracket 74, having an appropriate extension for this purpose.

While the above disclosure addresses a preferred embodiment of the invention and certain variants, it shall be understood that a number of changes may be made thereto.

For example, while the installation of the drill unit/s on the internal jaw 36 of the apparatus is preferred for a more efficient distribution of moving masses and for bulk reasons, the two drill units (or one adjustable unit) may be also mounted to the external right-angle jaw formed by the plates 28, 29 (see Fig. 3).

Also, a first drill unit may be mounted to the internal jaw and a second drill unit may be mounted to the external jaw, in such an arrangement that the workpiece held by the clamp may be drilled on both sides of the squared corner (of the workpiece) held by the clamp.

## Claims

1. An apparatus for moving a workpiece, such as a window frame (30) and the like, from a welding station (5) to a cleaning station (14), comprising:
- a clamp (37) with movable jaws,
- a carriage (18) for supporting said clamp (37), said carriage (18) being movable between said welding station (5) and said cleaning station (14),
wherein said clamp (37) is capable of being moved in a vertical direction and actuated for seizing the workpiece, said clamp (37) being also capable of being oriented in an horizontal plane for rotating the workpiece, said clamp (37) comprising an internal squared-wedge jaw (36) and an external jaw (28, 29) cooperating with said internal jaw (36) for clamping and precisely positioning said workpiece in said clamp,
said external jaw being a right-angle jaw comprising two vertical plates connected to each other, **characterized in that**
said internal squared-wedge jaw (36) consists of a prismatic box-like body, which is composed of three or four vertical posts (38, 39, 40, 41) and it comprises a bottom plate (42) for connecting said posts (38, 39, 40, 41) at their bottom,
and that at least one drill unit (51, 52, 69, 82) with corresponding motor (53, 54, 70, 83) is mounted, vertically movable under the control of an actuator (47, 48, 68, 73) held within said prismatic box-like body of said internal squared-wedge jaw (36), on at least one of said internal (36) and external (28, 29) jaws, to drill the workpiece on a surface of said workpiece (30) exposed between the two jaws as said clamp (37) and said workpiece are displaced between said welding station (5) and said cleaning station (14).

2. An apparatus as claimed in claim 1, wherein there are two independently operable drill units (51, 52).

3. An apparatus as claimed in claim 1, wherein said at least one unit is mounted on said internal jaw (36).

4. An apparatus as claimed in claim 3, wherein there is only one drill unit (69) and said internal jaw (36) is a double squared edge jaw (57, 58, 59), which is capable of being angularly oriented in the horizontal plane, with a 90° rotation relative to said external jaw (28, 29) under the control of an actuator (64).

5. An apparatus as claimed in claim 3, wherein there is only one drill unit (82), which is capable of being angularly oriented, with a 90° rotation relative to said internal jaw (36) under the control of an actuator (88).

## Patentansprüche

1. Vorrichtung zum Bewegen eines Werkstücks wie etwa eines Fensterrahmens (30) und dergleichen von einer Schweißstation (5) zu einer Reinigungsstation (14), die umfasst:
- eine Klemme (37) mit beweglichen Klauen,
- einen Schlitten (18) zum Tragen der Klemme (37), wobei der Schlitten (18) zwischen der Schweißstation (5) und der Reinigungsstation (14) beweglich ist,
- wobei die Klemme (37) in einer vertikalen Richtung bewegt und betätigt werden kann, um das Werkstück zu ergreifen, wobei die Klemme (37) außerdem in einer horizontalen Ebene orientiert werden kann, um das Werkzeug zu drehen, wobei die Klemme (37) eine innere Vierkantkeil-Klaue (36) und eine äußere Klaue (28, 29), die mit der inneren Klaue (36) zusammenwirkt, um das Werkstück in der Klemme festzuklemmen und präzise zu positionieren, umfasst,
wobei die äußere Klaue eine rechtwinklige Klaue ist, die zwei miteinander verbundene vertikale Platten aufweist,
**dadurch gekennzeichnet, dass**
die innere Vierkantkeil-Klaue (36) aus einem prismenförmigen, kastenartigen Körper besteht, der aus drei oder vier vertikalen Stützen (38, 39, 40, 41) gebildet ist und eine Bodenplatte (42) zum Verbinden der Stützen (38, 39, 40, 41) an ihrer Unterseite umfasst,
und dass wenigstens eine Bohreinheit (51, 52, 69, 82) mit entsprechendem Motor (53, 54, 70, 83) unter der Steuerung eines in dem prismenförmigen, kastenartigen Körper der inneren Vierkantkeil-Klaue (36) gehaltenen Aktors vertikal beweglich an der inneren Klaue (36) und/oder der äußeren Klaue (28, 29) montiert ist, um das Werkstück auf einer Oberfläche des Werkstücks (30), die zwischen den zwei Klauen freiliegt, wenn die Klemme (37) und das Werkstück zwischen der Schweißstation (5) und der Reinigungsstation (14) verlagert werden, zu bohren.

2. Vorrichtung nach Anspruch 1, wobei zwei unabhängig betätigbare Bohreinheiten (51, 52) vorhanden sind.

3. Vorrichtung nach Anspruch 1, wobei die wenigstens eine Einheit an der inneren Klaue (36) montiert ist.

4. Vorrichtung nach Anspruch 3, wobei nur eine Bohreinheit (69) vorhanden ist und die innere Klaue (36) eine doppelte Vierkantklaue (57, 58, 59) ist, die in Winkelrichtung in der horizontalen Ebene mit einer 90°-Drehung in Bezug auf die äußere Klaue (28, 29) unter der Steuerung des Aktors (64) orientiert werden kann.

5. Vorrichtung nach Anspruch 3, wobei nur eine Bohreinheit (82) vorhanden ist, die in Winkelrichtung mit einer 90°-Drehung in Bezug auf die innere Klaue (36) unter der Steuerung eines Aktors (88) orientiert werden kann.

## Revendications

1. Appareil pour déplacer une pièce à usiner, telle qu'un châssis de fenêtre (30) et similaire, d'une station de soudage (5) jusqu'à une station de nettoyage (14), comprenant :
un étau (37) avec des mâchoires mobiles,
un chariot (18) pour supporter ledit étau (37), ledit chariot (18) étant mobile entre ladite station de soudage (5) et ladite station de nettoyage (14),
dans lequel ledit étau (37) peut être déplacé dans une direction verticale et actionné pour saisir la pièce à usiner, ledit étau (37) pouvant être orienté dans un plan horizontal pour faire tourner la pièce à usiner, ledit étau (37) comprenant une mâchoire interne (36) en forme de coin carré et une mâchoire externe (28, 29) coopérant avec ladite mâchoire interne (36) pour serrer et positionner précisément ladite pièce à usiner dans ledit étau,
ladite mâchoire externe étant une mâchoire en angle droit comprenant deux plaques verticales raccordées entre elles,
**caractérisé en ce que** :
ladite mâchoire interne (36) en forme de coin carré se compose d'un corps en forme de boîte prismatique, qui est composé de trois ou quatre montants verticaux (38, 39, 40, 41) et il comprend une plaque inférieure (42) pour raccorder lesdits montants (38, 39, 40, 41) au niveau de leur fond,
et **en ce qu'**au moins une unité de perçage (51, 52, 69, 82) avec un moteur correspondant (53, 54, 70, 83) est montée, de manière verticalement mobile sous la commande d'un actionneur (47, 48, 68, 73) maintenu à l'intérieur dudit corps en forme de boîte prismatique de ladite mâchoire interne (36) en forme de coin carré, sur au moins l'une parmi lesdites mâchoire interne (36) et mâchoire externe (28, 29), afin de percer la pièce à usiner sur une surface de ladite pièce à usiner (30) exposée entre les deux mâchoires lorsque ledit étau (37) et ladite pièce à usiner sont déplacés entre ladite station de soudage (5) et ladite station de nettoyage (14).

2. Appareil selon la revendication 1, dans lequel on trouve deux unités de perçage (51, 52) pouvant fonctionner indépendamment.

3. Appareil selon la revendication 1, dans lequel ladite au moins une unité est montée sur ladite mâchoire interne (36).

4. Appareil selon la revendication 3, dans lequel on trouve une seule unité de perçage (69) et ladite mâchoire interne (36) est une double mâchoire à bord carré (57, 58, 59), qui peut être orientée de manière angulaire dans le plan horizontal, avec une rotation à 90° par rapport à ladite mâchoire externe (28, 29) sous le contrôle d'un actionneur (64).

5. Appareil selon la revendication 3, dans lequel on trouve une seule unité de perçage (82), qui peut être orientée de manière angulaire, avec une rotation à 90° par rapport à ladite mâchoire interne (36) sous le contrôle d'un actionneur (88).
